**Europäisches Patentamt**

**European Patent Office**

**Office européen des brevets**

(11) Veröffentlichungsnummer: **0 250 637**
**A1**

(12) # EUROPÄISCHE PATENTANMELDUNG

(21) Anmeldenummer: **86109546.1**

(22) Anmeldetag: **11.07.86**

(51) Int. Cl.³: **A 61 C 13/10**

(30) Priorität: **27.06.86 DE 8617182 U**

(43) Veröffentlichungstag der Anmeldung:
**07.01.88 Patentblatt 88/1**

(84) Benannte Vertragsstaaten:
**AT BE CH DE FR GB IT LI LU NL SE**

(71) Anmelder: **Ludwigs, Horst**
**Lenbachstrasse 33**
**D-4800 Bielefeld 1(DE)**

(72) Erfinder: **Ludwigs, Horst**
**Lenbachstrasse 33**
**D-4800 Bielefeld 1(DE)**

(74) Vertreter: **Hanewinkel, Lorenz, Dipl.-Phys.**
**Patentanwalt Ferrariweg 17a**
**D-4790 Paderborn(DE)**

(54) **Aufstellhilfe für das lagerichtige Aufstellen der Zähne bei Unterkiefer-Totalprothesen.**

(57) Die Aufstellhilfe für das lagerichtige Aufstellen der Zähne (1 bis 7) bei Unterkiefer-Totalprothesen weist einen kalottenartig gewölbten, gegenüber einem Unterkiefermodell (11) lagefixierbaren Halter (10) mit sagittaler und transversaler Kompensationskurve (28) und zwei innerhalb der Kalotte schwenkbaren und verschiebbaren sowie arretierbaren Einsätzen (12) zur Einstellung der Poundschen Linie auf.

Die Aufstellhilfe bildet eine dreigeteilte Kalotte, bei der am Halter (10) für die rechte und die linke Poundsche Linie wechselweise je ein oder gleichzeitig zwei innerhalb der Kalottenwölbung verschwenkbare, verschiebbare und arretierbare Einsätze (12) lösbar eingesetzt sind.

Die Einsätze (12) sind von Linealen mit durchsichtigen, eine mit der Poundschen Linie in Deckung bringbaren Linienmarkierung ausgestatteten Bereichen gebildet.

Fig. 1

- 1 -

Aufstellhilfe für das lagerichtige Aufstellen der Zähne
bei Unterkiefer-Totalprothesen

Die Erfindung bezweckt die Schaffung einer einfach aufgebauten und
leicht zu handhabenden Aufstellhilfe, mit der in einfacher und
sicherer Weise ein lagerichtiges Aufstellen der Zähne bei Unterkiefer-
Totalprothesen ermöglicht werden soll.

Diese Aufgabe wird erfindungsgemäß durch eine dreiteilige Kalotte aus
einem gegenüber einem Unterkiefermodell lagefixierbaren Halter und
zwei innerhalb der Kalottenebene verschwenkbaren, verschiebbaren
und arretierbaren Einsätze zur Einstellung der Poundschen Linie gelöst.

Vorteilhafte Weiterbildungen dieser Aufgabenlösung stellen die in den
einzelnen Unteransprüchen aufgeführten Gestaltungsmerkmale dar.

Der Gegenstand der Erfindung erstreckt sich nicht nur auf die Merkmale
der einzelnen Ansprüche, sondern auch auf deren Kombination.

Durch die erfindungsgemäße Aufstellhilfe können die Zähne in ihrer
Neigung entsprechend der durch die Kalotte gebildeten Kompensationskurve auf die Poundsche Linie, die bezogen auf die genommenen Werte
des Unterkiefermodells genau definiert mittels der eingestellten
Einsätze festgelegt wird, aufgestellt werden.

Für die rechte und die linke Poundsche Linie wird jeweils nacheinander ein linealförmiger Einsatz mit Steckarm in den Halter eingesteckt und dann kann das Lineal innerhalb der Kalottenwölbung stufenlos verschwenkt und verschoben werden, wobei das Lineal in jeder Stellung innerhalb der Kalottenwölbung verbleibt.

Weiterhin lassen sich für die rechte und linke Poundsche Linie in dem Halter gleichzeitig zwei Einsätze verstellbar vorsehen, so daß ohne Einsatzwechsel ein Zahnaufstellen beider Zahnreihen möglich ist.

Durch diese einfache und beliebige Verstellung des bzw. der Einsätze ist ein genaues Einrichten auf die Poundsche Linie möglich.

Jeder Einsatz wird durch seine in den Halter klemmend eingreifenden Steckarme in Verbindung mit Spannschrauben in jeder eingestellten Lage sicher arretiert.

Die lagerichtige Stellung der Zähne, bezogen auf den Kieferkamm, ist durch die klarsichtigen Einsätze genau überprüfbar.

Die Aufstellhilfe ist einfach und kostensparend aufgebaut, leicht zu handhaben und hat einen hohen Gebrauchswert.

Die erfindungsgemäße Aufstellhilfe ist in Verbindung mit einem Artikulator für eine genaue und bequeme Arbeitsweise sowie einwandfreie Anfertigung von Unterkiefer-Totalprothesen vorgesehen und dabei von Vorteil.

Anhand der Zeichnungen wird nachfolgend ein Ausführungsbeispiel der Erfindung näher erläutert. Es zeigt:

Fig. 1    eine Seitenansicht eines Artikulators zur Fixierung von Unterkiefermodellen mit einer an einem Klapparm festgelegten Aufstellhilfe für Unterkiefer-Totalprothesen in der Gebrauchsstellung,

Fig. 2    eine Draufsicht auf einen kalottenartig gewölbten Halter und zwei Einsätze der Aufstellhilfe, wobei ein Einsatz am Halter festgelegt und der andere abgenommen ist,

Fig. 3    eine Stirnansicht im Querschnitt des Halters mit Einsatz gemäß Fig. 2,

Fig. 4    eine Stirnansicht eines Einsatzes,

Fig. 5    eine Seitenansicht eines Einsatzes,

Fig. 6    eine Seitenansicht des Halters mit Einsatz,

Fig. 7    einen Querschnitt durch den an einem Adapter befestigten und gleichzeitig zwei Einsätze aufnehmenden Halter,

Fig. 8    eine Seitenansicht des Halters mit Einsätzen nach Fig. 7,

Fig. 9    eine schematische Draufsicht auf die beiden Poundschen Linien des Unterkiefers mit einer auf dem halben Unterkiefer angeordneten Zahnreihe.

Die Aufstellhilfe für das lagerichtige Aufstellen der Zähne 1. bis 7. (mit 8. ist der Weisheitszahn bezeichnet) bei Unterkiefer-Totalprothesen ist von einer dreiteiligen Kalotte gebildet, die einen kalottenartig gewölbten, gegenüber einem Unterkiefermodell (11) lagefixierbaren Halter (10) mit sagittaler und transversaler Kompensationskurve (28) und zwei innerhalb der Kalotte (Kalottenwölbung/Kalottenebene) schwenkbare und verschiebbare sowie arretierbare Einsätze (12) zur Einstellung auf die Poundschen Linien (13) aufweist.

Der Halter (10) ist von einem in Längs- und Querrichtung kalottenförmig gewölbten Steg gebildet, der zwei durch einen Abstandshalter (31) mit Abstand übereinandergehaltene, an beiden Längenenden durch je eine Senkkopfschraube (29) mit Rändelmutter (30) zusammengehaltene und zwischen sich einen sich über die gesamte Stegbreite und bis auf den Abstandshalter (31) über die gesamte Steglänge erstreckenden Einsteckschlitz (10b) bildende Stegplatten (10a) besitzt.

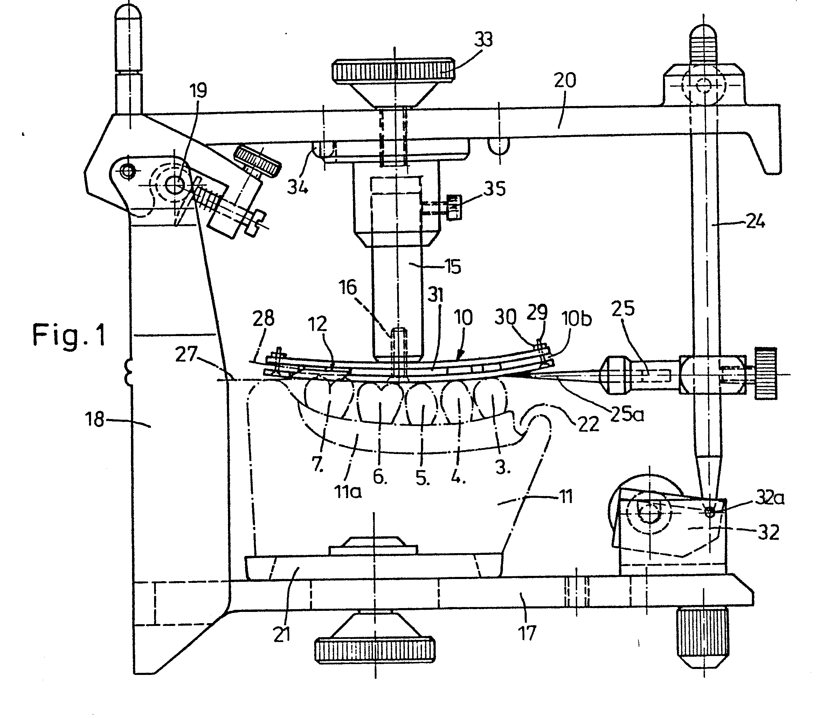

Der Abstandshalter (31) ist von einer Platte gebildet, die sich im mittleren Längenbereich des Halters (10) erstreckt; eine Senkkopfschraube (16) faßt von unten her durch die beiden Stegplatten (10a) und den Abstandshalter (31) hindurch und mit dieser Senkkopfschraube (16) wird die Aufstellhilfe an einem Adapter (15) befestigt und mit dem Adapter (15) in einem Artikulator gemäß Fig. 1 festgelegt.

Die beiden Senkkopfschrauben (29) fassen ebenfalls von unten her durch die Stegplatten (10a) hindurch und alle drei Senkkopfschrauben (16,29) liegen bündig zu der unteren, wirksamen Kalottenwölbung, so daß sie nicht stören.

Jeder der beiden Einsätze (12) setzt sich aus einem Lineal (12a) und und zwei an jeweils einem Lineal-Längenende im definierten Winkel an einer gemeinsamen Linealseite abgehenden Steckarmen (12b) zusammen, wobei das Lineal (12a) und die Steckarme (12b) von Plattenteilen gebildet und entsprechend der Kalotte in sagittaler und transversaler Richtung gewölbt sind. Die Steckarme (12b) lassen sich durch Kleben mittels Nieten, Schrauben od. dgl. an dem Lineal (12a) auf dessen Oberseite befestigen oder mit dem Lineal (12a) einstückig ausbilden. Jeder Einsatz (12) faßt mit seinen Steckarmen (12b) in den Einsteckschlitz (10b) des Halters (10) von einer Seite ein, wobei beim Einstellen auf die Poundsche Linie (13) ein oder beide Einsätze (12) im Halter (10) eingesteckt sind. Bei Verwendung nur eines Einsatzes (12) wird nach der Einstellung auf die Poundsche Linie (13) und Aufstellung der Zähne 3. bis 7. dieser Einsatz (12) entfernt und dann der zweite Einsatz (12) eingesetzt und der gleiche Vorgang erfolgt auf der gegenüberliegenden Seite.

Der Einsteckschlitz (10b) und die Steckarme (12b) sind so aufeinander abgestimmt, daß eine Klemmwirkung in der eingesteckten Stellung entsteht, die durch die Schrauben (16) noch verstärkt oder unterstützt werden kann, wobei durch die Verwendung von Rändelmuttern (30) ein Überdrehen der Schraubwirkung verhindert und der Einsatz eines Werkzeuges ausgeschlossen wird.

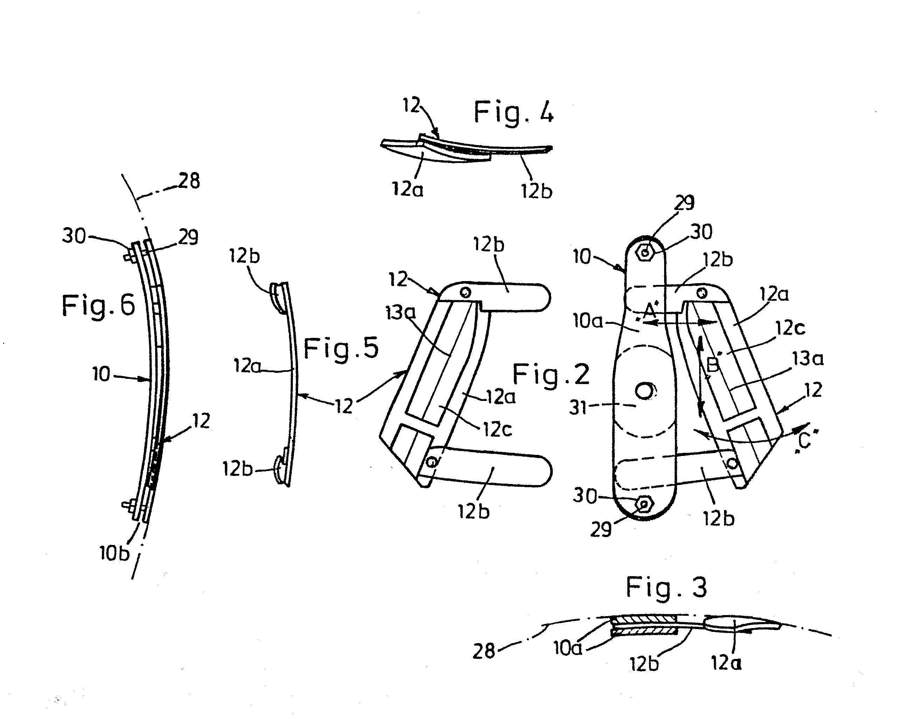

Es ist bevorzugt, das Lineal (12a) aus einem durchsichtigen Kunststoff zu fertigen und dabei auf der Unterseite des Lineals (12a) eine geradlinige Linienmarkierung (13a), wie Farblinie, Rille, Erhöhung od. dgl., vorzusehen, mit der das Lineal (12a) auf die Poundsche Linie (13) genau eingerichtet werden kann. Auch kann das Lineal (12a) nur teilweise durchsichtig sein, wie in Fig. 2 dargestellt. Hierbei hat das Lineal (12a) ein Fenster, in das ein durchsichtiges Teil (12c) eingesetzt ist, das die Linienmarkierung (13a) besitzt.

Weiterhin kann das Lineal (12a) auch aus undurchsichtigem Material bestehen - hierbei bildet dann die innere Lineal-Längskante die gemäß der Poundschen Linie (13) einrichtbare Zahnführungskante.

Der mit seinen Steckarmen (12b) in den Einsteckschlitz (10b) eingesteckte Einsatz (12) ist in Seitenrichtung "A" und in Längsrichtung "B" stufenlos verschiebbar und in Pfeilrichtung "C" stufenlos verschwenkbar (Fig. 2), so daß eine individuelle Einstellung des Einsatzes (12) möglich ist. In jeder eingestellten Stellung befindet sich der Einsatz (12) dabei immer innerhalb der Kalottenebene, d.h., der Einsatz (12) wird immer nur innerhalb der Kalottenwölbung bewegt.

Der Halter (10) und die beiden Einsätze (12) lassen sich aus Metall, wie Leichtmetall, undurchsichtig oder mit durchsichtigem Bereich für die Markierung (13a) oder aus durchsichtigem Kunststoff bilden.

Das Lineal (12a) und die daran angebrachten oder mit dem Lineal (12a) einteilig ausgebildeten Steckarme (12b) haben vorzugsweise eine rechteckige Grundform, sie können aber auch andere, geeignete Grundformen haben.

In Fig. 1, 3 und 6 ist der Halter (10) für die Aufnahme immer nur eines Einsatzes (12) ausgeführt und demzufolge hat der Abstandshalter (31) eine Höhe, die der Stärke der Steckarme (12b) entspricht und dementsprechend ist auch die Schlitzhöhe bestimmt. Bei dieser Ausführung wird erst ein Einsatz (12) eingesteckt und auf die Poundsche Linie (13) eingerichtet und nach dem Aufstellen der Zähne 3. bis 7. der Einsatz (12) herausgenommen und dann kann der zweite Einsatz (12) eingesetzt und für die gegenüberliegende Zahnreihe 3. bis 7. benutzt werden.

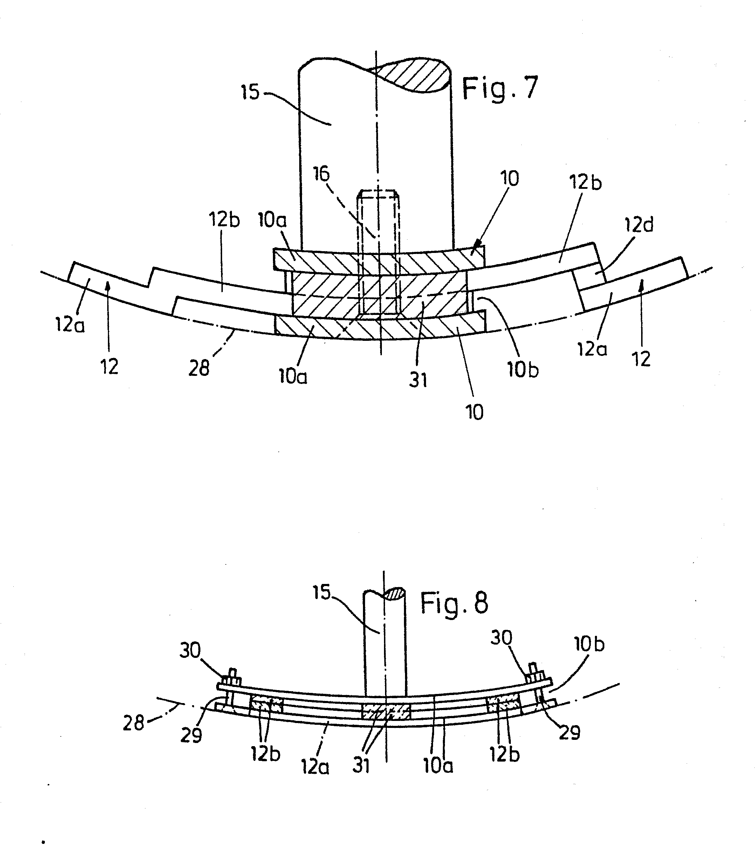

Fig. 7 und 8 zeigt eine Ausführung für den gleichzeitigen Einsatz beider Einsätze (12). Hierbei ist der Abstandshalter (31) in der Höhe der doppelten Stärke der Steckarme (12b) als ein Plattenteil oder zwei aufeinanderliegende Plattenteile ausgeführt, so daß der Schlitz (10b) das Einstecken beider Einsätze (12) ermöglicht, die dann mit ihren Steckarmen (12b) aufeinanderliegen.

Es ist bevorzugt, den Abstandshalter (31) von zwei gleich dicken, den Steckarmstärken entsprechenden Plattenteilen zu bilden, wodurch je nach Wunsch der Halter (10) durch Einsatz eines oder beider Abstandshalter-Plattenteile für eine wechselweise einseitige oder gleichzeitig beidseitige Einsteckung der Einsätze (12) verwendet werden kann.

Der bekannte Artikulator gemäß Fig. 1, in den die Aufstellhilfe eingesetzt wird, weist eine in sich ebene Grundplatte (17) auf, auf der sich senkrechte Säulen (18) abstützen, zwischen denen im oberen Endbereich um eine waagerechte Achse (19) ein Klapparm (20) für die Befestigung der Aufstellhilfe mittels des Adapters (15) schwenkbar gehalten ist.

Auf der Grundplatte (17) wird das Unterkiefermodell (11) auf einer Sockelplatte (21), auf den Symphysenpunkt (22) und die Trigoni (23) eingerichtet, aufgenommen.

Am Klapparm (20) ist ein Stützbolzen (24) mit Einstellstift (25) für die Kauebene (27) vorgesehen, der in der heruntergeschwenkten Klapparmstellung gemäß Fig. 1 die Aufstellhilfe in der richtigen Bißhöhe hält.

Der Stützbolzen (24) ist höheneinstellbar im Klapparm (20) gelagert und stützt sich auf einem um eine waagerechte Achse (32a) schwenkbaren Einstelltisch (32) der Grundplatte (17) ab, wobei die Längsachse des Stützbolzens (24) mit der Schwenkachse (32a) fluchtet.

Die Kauebene (27) der Kalotte (10,12) wird dadurch fixiert, daß der Adapter (15) in sich eine feste Einheit bildet und in seiner Höhe in bezug auf den verwendeten Artikulator definiert ist, so daß beim Herunterklappen des Klapparmes (20) mit Adapter (15) und Kalotte (10,12) immer die richtige Kaubene (27) vorliegt.

Der Adapter (15) ist durch eine Rändelschraube (33) am Klapparm (20) lösbar befestigt und durch mindestens einen in den Adapter (15) eingreifenden Vorsprung (34) verdrehsicher am Klapparm (20) gehalten (Fig. 1).

Die Höhe der Kauebene (27) läßt sich aber auch durch einen in sich höhenverstellbaren Adapter (15) einstellen. Hierbei ist der Adapter (15) in sich teleskopartig verschiebbar ausgeführt und wird durch eine Feststellschraube (35) in der eingestellten Höhe fixiert.

Um den senkrechten Stützbolzen (24) ist ein Einstellstift (25) mit Spitze (25a) verdrehsicher, höhenverschiebbar und fixierbar gelagert. Der Stützbolzen (24) weist auf Höhe der fiktiven Kauebene (27) eine Markierung auf, auf die der Einstellstift (25) eingestellt wird und dann liegt dessen Spitze (25a) auf der fiktiven Kauebene (27) und somit auf dem Incisalpunkt.

Des weiteren zeigt der Einstellstift (25) immer in Längsrichtung des Halters (10) und seine Spitze (25a) liegt auf der Halter-Längsachse (36), die durch eine am Halter (10) angebrachte Mittellinie gekennzeichnet ist.

Für die Einstellung des Adapters (15) auf die Kauebene (27) wird der Klapparm (20) heruntergeschwenkt und der Halter (10) fällt auf die Spitze (25a) und hat dadurch die richtige Höhenlage; nun kann der Adapter (15) durch die Feststellschraube (35) fixiert werden und die Kalotte (10,12) befindet sich exakt auf der Bißhöhe.

Die Längsachse (36) des Halters (10) verläuft auf der Längsachse des
Artikulators, damit auch nach Entfernen des Einstellstiftes (25) die
Mittelachse des Kiefers erkennbar bleibt, indem man sich an der am
Halter (10) angebrachten Mittellinie (36) orientieren kann.

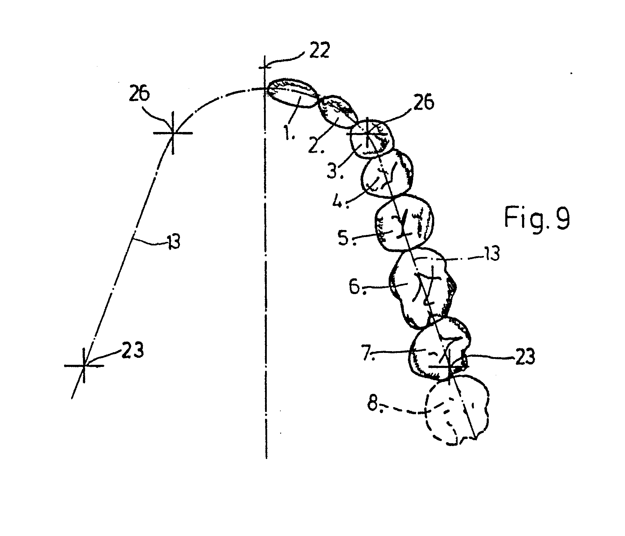

Die Fig. 9 zeigt eine schematische Draufsicht auf einen Unterkiefer mit
einer Zahnreihe an Zähnen 1. bis 8.. Die Poundschen Linien (13)
verlaufen dabei zwischen den Eckzahnpunkten (26) und den Trigoni (23).

Der Funktionsablauf für das Aufstellen der Zähne bei Unterkiefer-
Totalprothesen mittels der Aufstellhilfe und in Verbindung mit dem
Artikulator ist folgender:

1.  Das Unterkiefermodell (11) wird im Artikulator mittels der
    Sockelplatte (21) auf die wesentlichen Punkte, nämlich
    Symphysenpunkt (22), Trigoni (23) und Kauebene (27) eingerichtet,
    eingesetzt,

2.  der Klapparm (20) mit der daran durch den Adapter (15) gehaltenen
    Aufstellhilfe wird in die in Fig. 1 dargestellte Gebrauchsstellung
    heruntergeschwenkt und dabei wird die Aufstellhilfe durch den
    Stützbolzen (24) und den in sich starren Adapter (15) oder durch
    den Einstellstift (25) und höhenverstellbaren und fixierbaren
    Adapter (15) in der richtigen Höhe gehalten und es wird die Höhe
    der aufzustellenden Zähne 3. bis 7. mit Bezug auf die Kauebene
    (27) definiert festgelegt,

3.  auf dem Modell (11) sind dann die Trigoni (23) und die Eckzahnpunkte (26) zu markieren,

4.  anschließend ist die Poundsche Linie (13), dargestellt an der
    Unterseite des Lineales (12a), in vertikaler Richtung mit den auf
    dem Kieferkamm (11a) angebrachten Markierungen (23,26) in
    Deckung zu bringen, was durch Verschieben und Verschwenken des
    einen Einsatzes (12) oder beider Einsätze (12) erfolgt,

5.  die Arretierung des bzw. der eingestellten Einsätze (12) wird durch die Klemmung des Einsteckarmes (12b) im Einsteckschlitz (10b) selbsttätig bzw. durch die Rändelmuttern (30) vorgenommen,

6.  nunmehr können die Zähne 1. bis 7. aufgestellt werden,

7.  zuerst wird eine Zahnreihe 3. bis 7. anhand eines Einsatzes (12) aufgestellt und dann erfolgt das Auswechseln des Einsatzes (12) durch den zweiten Einsatz (12) und der gleiche Vorgang läuft auf der gegenüberliegenden Seite ab. Sind am Halter (10) beide Einsätze (12) festgelegt, können auch beide Zahnreihen in einem Vorgang aufgestellt werden.

Die Zähne 1. bis 7. stehen in der sagittalen und auch transversalen Kompensationskurve (28), deren Kurvenform auch die Kalotte (10,12) hat, welche auf der Höhe des 3. sowie im Übergangsbereich zwischen 6. und 7. Zahn die fiktive Kauebene (27) kreuzt.

Dadurch, daß die Linie (13a) an der Unterseite der durchsichtigen Einsätze (12) - Lineale (12a) - angebracht ist, wird die Wirkung der Lichtbrechung umgangen und dadurch ein optimal genaues Einstellen von oben her ermöglicht.

Das Aufstellen der Unterkieferzähne 3. bis 7. erfolgt entsprechend der eingestellten Poundschen Linie (13) und erfüllt damit wichtige Grundvoraussetzungen zur Funktion der anzufertigenden Prothese.

Beim gleichzeitigen Einstecken zweier Einsätze (12) in den Halter (10) ist gemäß Fig. 7 bei einem Einsatz (12) zwischen dem Lineal (12a) und dem Steckarm (12b) ein Abstandshalter (12d) vorgesehen, so daß die Steckarme (12b) beider Einsätze (12) übereinander liegen und die beiden Lineale (12a) in derselben Kalottenwölbung (28) sich erstrecken.

Patentansprüche

1. Aufstellhilfe für das lagerichtige Aufstellen der Zähne bei Unterkiefer-Totalprothesen, gekennzeichnet durch einen kalottenartig gewölbten, gegenüber einem Unterkiefermodell (11) lagefixierbaren Halter (10) mit sagittaler und transversaler Kompensationskurve (28) und zwei innerhalb der Kalotte schwenkbaren und verschiebbaren sowie arretierbaren Einsätzen (12) zur Einstellung der Poundschen Linie (13).

2. Aufstellhilfe nach Anspruch 1, dadurch gekennzeichnet, daß dieselbe eine dreigeteilte Kalotte bildet, bei der am Halter (10) für die rechte und die linke Poundsche Linie (13) wechselweise je ein innerhalb der Kalottenwölbung verschwenkbarer, verschiebbarer und arretierbarer Einsatz (12) lösbar eingesetzt ist.

3. Aufstellhilfe nach Anspruch 1, dadurch gekennzeichnet, daß dieselbe eine dreigeteilte Kalotte mit zwei am Halter (10) gleichzeitig auf die rechte und linke Poundsche Linie (13) einstellbaren, innerhalb der Kalottenwölbung verschwenkbaren, verschiebbaren und fixierbaren Einsätzen (12) gebildet ist.

4. Aufstellhilfe nach den Ansprüchen 1 bis 3, dadurch gekennzeichnet, daß der Halter (10) von einem Steg aus zwei im Abstand übereinander angeordneten, miteinander verbundenen und zwischen sich einen Einsteckschlitz (10b) für die Einsätze (12) bildenden Stegplatten (10a) gebildet ist.

- 12 -

5.  Aufstellhilfe nach den Ansprüchen 1 bis 4, dadurch gekennzeichnet, daß die beiden Stegplatten (10a) im mittleren Längenbereich des Halters (10) einen den Einsteckschlitz (10b) bildenden Abstandhalter (31) in Plattenform aufweisen, der in der Höhe der Stärke eines Steckarmes (12b) für das wechselweise Einstecken eines Einsatzes (12) entspricht.

6.  Aufstellhilfe nach den Ansprüchen 1 bis 4, dadurch gekennzeichnet, daß die beiden Stegplatten (10a) im mittleren Längenbereich des Halters (10) einen den Einsteckschlitz (10b) bildenden Abstandhalter (31) aufweisen, der in der Höhe der Stärke zweier Steckarme (12b) für das gleichzeitige Einstecken zweier Einsätze (12) entspricht und von einer oder zwei Plattenteilen gebildet ist.

7.  Aufstellhilfe nach den Ansprüchen 1 bis 6, dadurch gekennzeichnet, daß der Halter (10) in seinen beiden Längenenden jeweils eine die beiden Stegplatten (10a) zusammenhaltende und auf die Steckarme (12b) eine Klemmwirkung ausübende Senkkopfschraube (29) mit Rändelmutter (30) hat, wobei die Senkkopfschrauben (29) mit der Kalottenunterseite bündig verlaufen.

8.  Aufstellhilfe nach den Ansprüchen 1 bis 7, dadurch gekennzeichnet, daß der Halter (10) durch eine mit der Kalottenunterseite bündig verlaufende Senkkopfschraube (16) unter einem Adapter (15) befestigt und mit diesem in einem Artikulator fixierbar ist.

9.  Aufstellhilfe nach den Ansprüchen 1 bis 8, dadurch gekennzeichnet, daß jeder Einsatz (12) von einem auf die Poundsche Linie (13) einrichtbaren Lineal (12a) mit zwei an beiden Lineal-Längenenden winklig abgehenden und in den Einsteckschlitz (10b) klemmend eingesetzten, innerhalb des Einsteckschlitzes (10b) stufenlos verschieb- und verschwenkbaren Steckarmen (12b) gebildet ist.

0250637

10. Aufstellhilfe nach Anspruch 9, dadurch gekennzeichnet, daß mindestens das Lineal (12a) jedes Einsatzes (12) mindestens einen durchsichtigen Materialbereich, wie durchsichtigen Kunststoffstreifen, aufweist, vorzugsweise aus durchsichtigem Kunststoff besteht, und auf der Unterseite des durchsichtigen Lineals (12a) bzw. Linealbereiches eine mit der Poundschen Linie (13) in Deckung zu bringende Markierungslinie (13a), wie Farblinie, Rille, Erhöhung (Rippe) od. dgl., vorgesehen ist, die sich in Längsrichtung des Lineals (12a) erstreckt.

11. Aufstellhilfe nach den Ansprüchen 1 bis 10, dadurch gekennzeichnet, daß der Halter (10) eine auf seiner Längsachse verlaufende Linienmarkierung (36) in Form einer Farblinie, Rille, erhöhten Kante od. dgl. hat.

12. Aufstellhilfe nach den Ansprüchen 1 bis 11, dadurch gekennzeichnet, daß dieselbe an einen in sich starren und mit einem Stützbolzen (24) des Artikulators die definierte Kauebene (27) der Kalotte (10,12) bestimmenden Adapter (15) befestigt ist.

13. Aufstellhilfe nach den Ansprüchen 1 bis 11, dadurch gekennzeichnet, daß dieselbe an einem höhenverstellbaren und mit einem an einem Stützbolzen (24) des Artikulators angebrachten Einstellstift (25) mit Spitze (25a) auf die Kaubene (27) einstellbaren Adapter (15) befestigt ist.

Fig.1

Fig. 4

12

12a    12b

Fig. 6

28

30    29

Fig. 5

12b

10

12a

12    12b

Fig. 2

12b

12

13a

12a

12c

12b

29

30

10

10a

A'

B'

12b

12a

12c

13a

12

C'

31

30

29

12b

10b

12b

Fig. 3

28    10a

12b    12a

Fig. 7

Fig. 8

Fig. 9

# EUROPÄISCHER RECHERCHENBERICHT

Nummer der Anmeldung

EP 86 10 9546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 909 719 (REINHOLD) <br> * Figuren 1,4-7; Seite 9, Zeile 28 - Seite 11, Zeile 28 * | 1,3 | A 61 C 13/10 |
| A | NL-A-8 501 029 (ALPHADENT) | | |
| A | US-A-2 234 411 (McDONALD) | | |

| RECHERCHIERTE SACHGEBIETE (Int Cl 4) |
|---|
| A 61 C |

Der vorliegende Recherchenbericht wurde für alle Patentansprüche erstellt.

| Recherchenort | Abschlußdatum der Recherche | Prüfer |
|---|---|---|
| DEN HAAG | 01-10-1986 | DEUTSCH J.P.M. |